# FASCICULE DE BREVET EUROPEEN

(11) **EP 0 642 942 B1**
(45) Date de publication et mention de la délivrance du brevet: **24.06.1998**
(21) Numéro de dépôt: 94402010.6
(22) Date de dépôt: 09.09.1994
(51) Int. Cl.: B60J 10/04, B60R 13/06

(54) **Corps allongé comportant une lèvre de fixation perfectionnée**
Langkörper mit verbesserter Befestigungslippe
Elongated body with an improved fastening lip

(30) Priorité: 09.09.1993 FR 9310717
(43) Date de publication de la demande: 15.03.1995
(73) Titulaire: HUTCHINSON, F-75008 Paris (FR)
(72) Inventeur: Marche, Thierry, F-45200 Montargis (FR)
(74) Mandataire: Hurwic, Aleksander

(56) Documents cités:
- DE-A- 3 003 808
- GB-A- 2 006 309

## Description

La présente invention se rapporte à un corps allongé, notamment à un profilé, comportant une lèvre de fixation perfectionnée, notamment sur le bord d'une tôle ou d'un assemblage de tôles.

Il est habituel dans l'industrie automobile de mettre en oeuvre des lèvres de fixation ménagées dans une gorge pour assurer la solidarisation, appelée agrafage, de profilés, et notamment de joints d'étanchéité en élastomère, sur un rebord de tôle. Une telle lèvre prend appui sur la tôle et s'oppose à une traction de dégrafage du profilé d'étanchéité, c'est-à-dire à une traction susceptible d'entraîner la désolidarisation du profilé et du rebord.

Une méthode d'accès non autorisée dans des véhicules automobiles afin de voler le véhicule ou son contenu consiste à arracher un joint d'étanchéité d'une vitre pour actionner de l'extérieur du véhicule un dispositif de commande d'ouverture de porte ou de fenêtre.

La Demanderesse a envisagé d'augmenter la force de traction nécessaire pour arracher le profilé en augmentant la force d'appui de la lèvre sur la tôle. Malheureusement, cela entraîne également une augmentation de la force nécessaire à l'agrafage du profilé, ce qui, dans certains cas, n'est pas acceptable pour le constructeur automobile.

GB-A-2 006 309 décrit un profilé comportant une lèvre de montage munie de dents. Chaque dent est une pièce massive qui s'oppose directement au dégrafage du profilé, par frottement.

C'est par conséquent un but de la présente invention d'offrir un corps allongé, notamment un profilé d'étanchéité, nécessitant une force de dégrafage importante.

C'est, également, un but de la présente invention d'offrir un tel corps allongé nécessitant une faible force d'agrafage.

Ces buts sont atteints selon l'invention par un corps allongé, notamment un profilé, comportant une lèvre de fixation, cette lèvre étant elle-même munie d'une lèvre augmentant la force d'appui de la lèvre de fixation lorsque l'on exerce une force de traction de dégrafage.

La mise en oeuvre de lèvres auxiliaires, ce qui implique une flexibilité de cet élément, augmente l'effort de dégrafage en appliquant la lèvre principale sur la paroi.

L'invention a principalement pour objet un profilé comportant une lèvre de fixation susceptible de prendre appui sur une surface de montage caractérisé en ce que la lèvre de fixation comporte au moins une lèvre auxiliaire prenant appui sur la surface de montage et appliquant la lèvre de fixation sur la surface de montage lorsque l'on exerce sur le profilé un effort de démontage, de manière à augmenter l'intensité des forces nécessaires au démontage du profilé de la surface de montage.

Selon divers modes de réalisation de l'invention:
- la lèvre auxiliaire est ménagée à la base de la lèvre de fixation.
- la lèvre de fixation est disposée sur une première paroi d'une gorge de montage.
- une seconde paroi de la gorge de montage est munie d'un élément d'appui disposé sensiblement en vis-à-vis de la lèvre de montage.
- la lèvre de fixation est munie d'une pluralité de lèvres auxiliaires, chaque lèvre auxiliaire étant susceptible de prendre appui sur une surface d'un profilé de montage, notamment d'un rebord de tôle ou d'assemblage de tôles d'épaisseurs différentes, pénétrant dans la gorge de montage.
- ledit profilé est un profilé d'étanchéité, notamment pour industrie automobile, notamment du type lécheur, joint de porte, joint de coffre ou coulisse.
- il comporte des éléments réalisés en élastomère.
- il comporte des éléments réalisés en plastomère.

L'invention a également pour objet un procédé d'agrafage d'un profilé, caractérisé en ce qu'il comporte une étape consistant à faire pénétrer un rebord d'une tôle ou d'un assemblage de tôles dans une gorge de montage jusqu'à l'obtention d'un appui de la lèvre de montage et de la lèvre auxiliaire sur une surface dudit rebord.

Le procédé suivant l'invention s'applique au montage d'un joint d'étanchéité pour industrie automobile.

L'invention sera mieux comprise au moyen de la description ci-après et des figures annexées données comme des exemples non limitatifs et sur lesquels :
- la figure 1 est une coupe transversale d'un profilé de type connu ;
- la figure 2 est une coupe transversale d'un premier exemple de réalisation d'un profilé selon la présente invention ;
- la figure 3 est une coupe transversale d'un deuxième exemple de réalisation d'un profilé selon la présente invention monté sur le rebord d'une tôle ;
- la figure 4 est une vue en coupe transversale du profilé de la figure 3 monté sur le rebord d'un assemblage de deux tôles ;
- la figure 5 est une courbe illustrant l'effort d'agrafage du profilé de la figure 1;
- la figure 6 est une courbe illustrant l'effort de dégrafage du profilé de la figure 1 ;
- la figure 7 est une courbe illustrant l'effort d'agrafage du profilé selon l'invention de la figure 2;
- la figure 8 est une courbe illustrant l'effort de dégrafage du profilé selon l'invention de la figure 2.

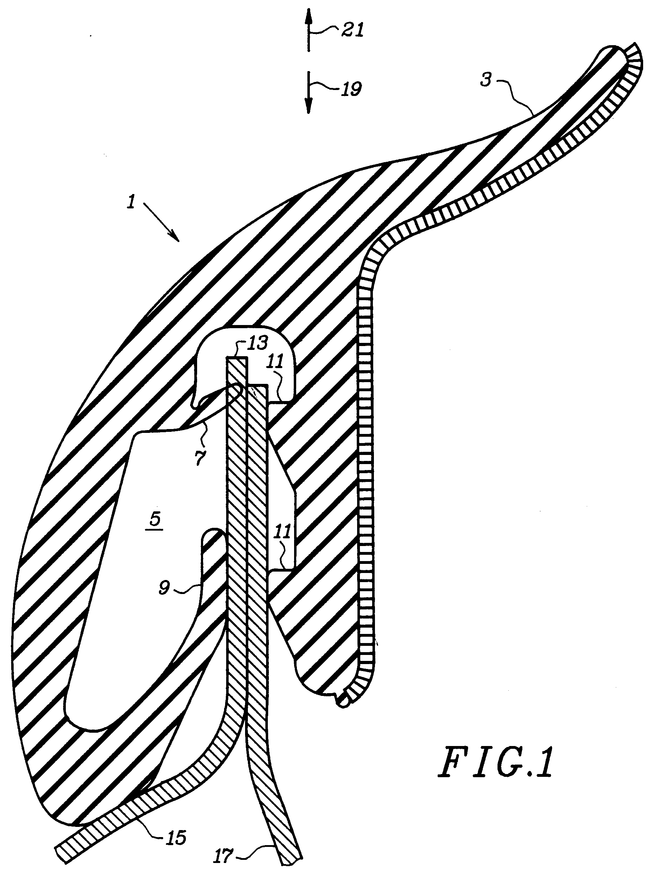

Sur les figures 1 à 8 on a utilisé les mêmes références pour désigner les mêmes éléments.

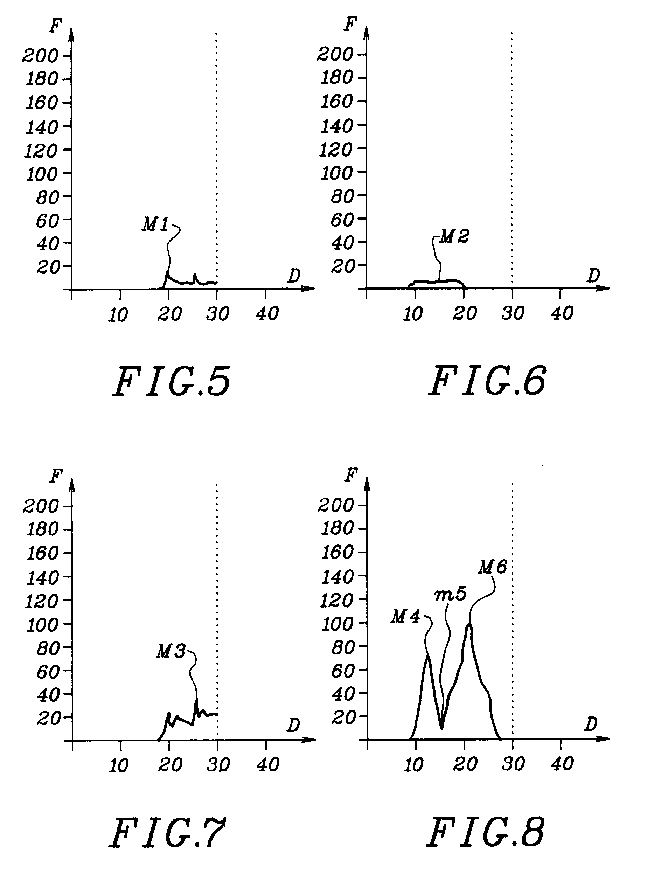

Sur la figure 1, on peut voir un lécheur 1 de type connu comprenant une lèvre d'étanchéité 3 et une gorge de montage 5 dont une première paroi comporte une petite lèvre de montage 7 et une grande lèvre de montage 9 et dont la paroi opposée comporte deux éléments d'appui 11. Le lécheur 1 est monté sur le rebord 13 d'un assemblage de deux tôles 15 et 17. Dans la condition agrafée illustrée sur la figure 1, les lèvres de montage 7 et 9 prennent appui sur une face de la tôle 15 alors que les éléments d'appui 11 prennent appui sur la face opposée de la tôle 17. L'agrafage du lécheur 1 est obtenu en exerçant une force selon la flèche 19. Sur la figure 5, on peut voir la force F à exercer lors de l'agrafage en fonction du déplacement D selon la flèche 19. Comme on peut le voir, la force maximale à exercer est égale à 18 N pour un déplacement sensiblement égal à 20 mm. Le dégrafage est obtenu en exerçant une force selon la flèche 21. La force F nécessaire pour obtenir un déplacement D est illustrée sur la figure 6. Comme on peut le voir sur cette courbe, une force de 8 N est suffisante pour assurer ce dégrafage.

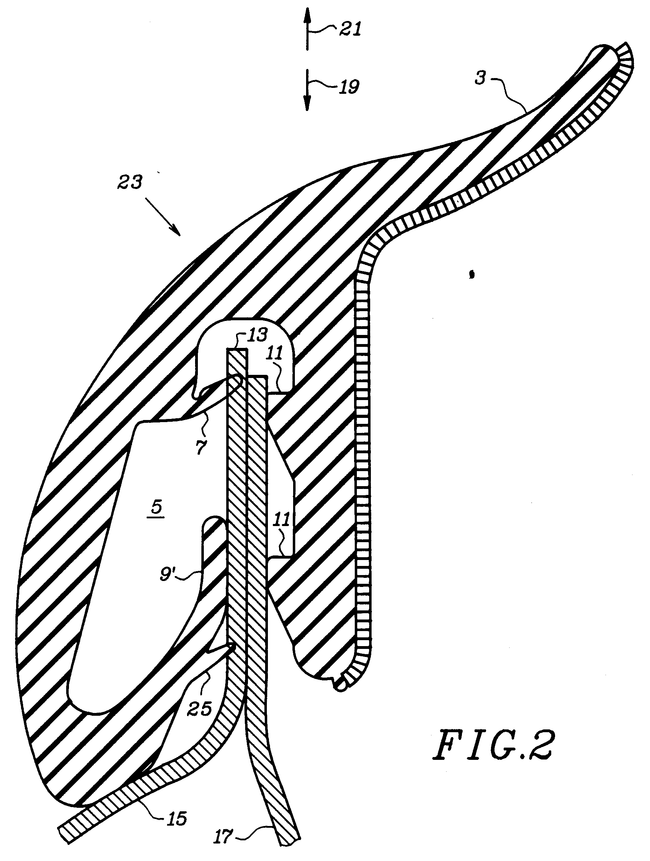

Sur la figure 2, on peut voir un lécheur 23 selon la présente invention ayant sensiblement la même configuration que le lécheur 1 de la figure 1 mais dont la base de la lèvre de montage 9' comporte une lèvre auxiliaire 25. La présence de la lèvre auxiliaire 25 augmente l'effort d'agrafage et de dégrafage. Cela est illustré, d'une part, sur la figure 7, sur laquelle on peut voir la force d'agrafage F pour 100 mm de joint exprimée en N en fonction de la distance D exprimée en mm et, d'autre part, sur la figure 8, sur laquelle on peut voir la force F de dégrafage pour 100 mm de joint exprimée en N en fonction de la distance D exprimée en mm. La force d'agrafage n'a augmenté, par rapport à celle du joint de la figure 1, que modérément jusqu'au maximum M3 où elle est égale à 37 N tandis qu'au contraire, la force de dégrafage a augmenté dans des proportions extrêmement importantes puisqu'au maximum M4 elle atteint 73 N. Après ce maximum, la force de dégrafage selon la flèche 21 diminue fortement et dans un cas sur deux elle tend vers 0. Dans les 50% des cas restants, on assiste à un retournement de la grande lèvre de montage 9', ce qui assure une augmentation de la force selon la flèche 21 avec passage par le maximum M6 correspondant à 102 N.

Les courbes des figures 5 à 8 ont été obtenues avec un rebord 13 d'une tôle de 1,5 mm d'épaisseur.

Pour garder toute son efficacité, c'est-à-dire pour assurer l'application de la lèvre 9' contre la tôle 15, la lèvre 25 doit prendre appui sur cette tôle. Il en résulte que la taille de la lèvre auxiliaire 25 dépend avantageusement de l'épaisseur du rebord de tôle 13 sur lequel on doit agrafer le profilé 23 selon la présente invention. Dans l'exemple illustré sur la figure 2, la lèvre de montage 9' est munie d'une lèvre auxiliaire 25 dont les dimensions sont adaptées à l'épaisseur du rebord 13 des tôles 15 et 17.

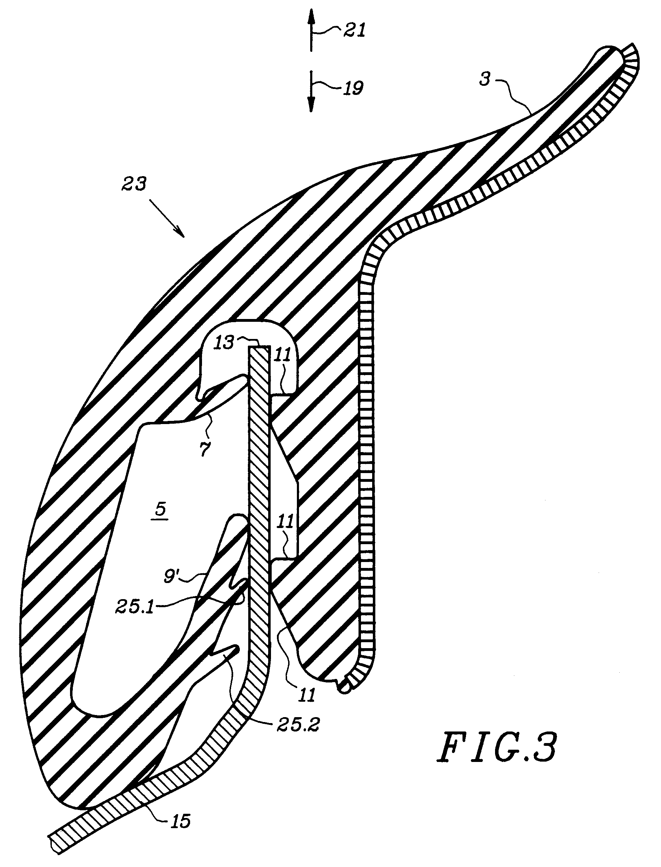

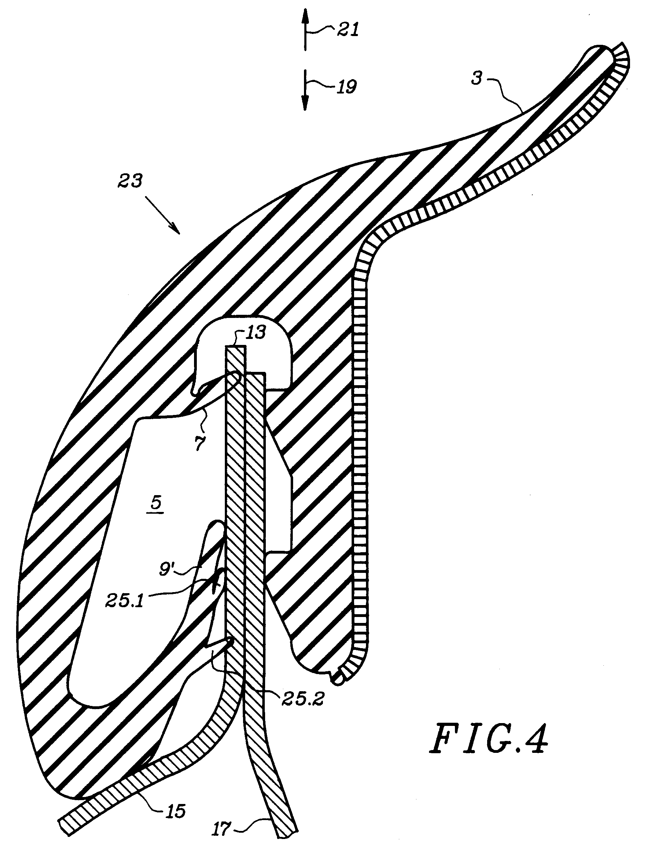

En variante, comme illustré sur les figures 3 et 4, le profilé 23 selon la présente invention peut être muni d'une pluralité de lèvres auxiliaires 25.1 et 25.2. Dans l'exemple illustré sur la figure 1, le lécheur 23 est agrafé sur une tôle unique 15. Dans ce cas, c'est la lèvre auxiliaire 25.1 qui assure l'application de la lèvre de montage 9' sur la tôle 15 dans le cas du dégrafage selon la flèche 21.

Au contraire, dans l'exemple illustré sur la figure 4, le profilé 23 est agrafé sur un rebord 13 d'un assemblage d'une tôle 15 et d'une tôle 17 dont l'épaisseur est sensiblement double de celle de la tôle 15. Dans ce cas, c'est la lèvre 25.2 qui, en prenant appui sur la tôle 15 et en augmentant la pression de la lèvre 9' sur la tôle 15, s'oppose au dégrafage selon la flèche 21.

Il est bien entendu que la présente invention n'est pas limitée à un profilé comportant deux lèvres auxiliaires 25.1 et 25.2 mais s'applique également aux profilés comportant 3, 4, 5, 6 ou plus lèvres auxiliaires.

Il est bien entendu que la présente invention n'est pas limitée aux lécheurs mais s'applique à tout profilé comportant une lèvre 9' de montage sur un rebord, et notamment aux profilés d'étanchéité tels que des lécheurs intérieurs ou extérieurs, des profilés d'étanchéité, des joints de coffres, des coulisses réalisés par exemple en élastomère et/ou en plastomère.

La présente invention s'applique principalement aux joints d'étanchéité pour industrie automobile.

## Revendications

1. Profilé comportant une lèvre de fixation susceptible de prendre appui sur une surface de montage, caractérisé en ce que la lèvre de fixation (9') comporte au moins une lèvre auxiliaire (25, 25.1, 25.2) prenant appui sur la surface de montage et appliquant la lèvre de fixation (9') sur la surface de montage lorsque l'on exerce sur le profilé un effort de démontage, de manière à augmenter l'intensité des forces nécessaires au démontage du profilé de la surface de montage.

2. Profilé selon la revendication 1, caractérisé en ce que la lèvre auxiliaire (25, 25.1, 25.2) est ménagée à la base de la lèvre de fixation (9').

3. Profilé selon la revendication 1 ou 2, caractérisé en ce que la lèvre de fixation (9') est disposée sur une première paroi d'une gorge de montage (5).

4. Profilé selon la revendication 3, caractérisé en ce qu'une seconde paroi de la gorge de montage (5) est munie d'un élément d'appui (11) disposé sensiblement en vis-à-vis de la lèvre de montage (9').

5. Profilé selon la revendication 3 ou 4, caractérisé en ce que la lèvre de fixation (9') est munie d'une pluralité de lèvres auxiliaires (25.1, 25.2), chaque lèvre auxiliaire étant susceptible de prendre appui sur une surface d'un profilé de montage, notamment d'un rebord de tôle ou d'assemblage de tôles (13) d'épaisseurs différentes, pénétrant dans la gorge de montage (5).

6. Profilé selon l'une quelconque des revendications précédentes, caractérisé en ce que ledit profilé est un profilé d'étanchéité, notamment pour industrie automobile, notamment du type lécheur, joint de porte, joint de coffre ou coulisse.

7. Profilé selon l'une quelconque des revendications précédentes, caractérisé en ce qu'il comporte des éléments réalisés en élastomère.

8. Profilé selon l'une quelconque des revendications précédentes, caractérisé en ce qu'il comporte des éléments réalisés en plastomère.

9. Procédé d'agrafage d'un profilé selon l'une quelconque des revendications 3 à 8, caractérisé en ce qu'il comporte une étape consistant à faire pénétrer un rebord (13) d'une tôle (15) ou d'un assemblage de tôles (15, 17) dans une gorge de montage (5) jusqu'à l'obtention d'un appui de la lèvre de montage (9') et de la lèvre auxiliaire (25) sur une surface dudit rebord (13).

10. Procédé selon la revendication 9, caractérisé en ce que ledit procédé est un procédé de montage d'un joint d'étanchéité pour industrie automobile.

## Claims

1. A profile member comprising a fixing lip adapted to bear on amounting surface, characterised in that the fixing lip (9') comprises at least one auxiliary lip (25, 25.1, 25.2) bearing on the mounting surface and applying the fixing lip (9') against the mounting surface when a demounting effort is applied to the profile, in order to increase the intensity of the forces needed to remove the profile from the mounting surface.

2. A profile according to claim 1, characterised in that the auxiliary lip (25, 25.1, 25.2) is constructed at the base of the fixing lip (9').

3. A profile according to claim 1 or 2, characterised in that the fixing lip (9') is disposed on a first wall of a mounting groove (5).

4. A profile according to claim 3, characterised in that the second wall of the mounting groove (5) is provided with a bearing element (11) disposed substantially opposite the mounting lip (9').

5. A profile according to claim 3 or 4, characterised in that the fixing lip (9') is provided with a plurality of auxiliary lips (25.1, 25.2), each auxiliary lip being capable of bearing on a surface of a mounting profile, particularly a returned edge of a metal sheet or an assembly of metal sheets (13) of different thicknesses, penetrating the mounting groove (5).

6. A profile according to any one of the preceding claims, characterised in that the said profile is a profiled seal, particularly for the automobile industry and particularly of the clinging type, door seal, zeal for a boot or slot.

7. A profile according to any one of the preceding claims, characterised in that it comprises elements produced from an elastomer.

8. A profile according to any one of the preceding claims, characterised in that it comprises elements produced from a plastomer.

9. A method of clamping a profile according to any one of claims 3 to 8, characterised in that it comprises a stage consisting of causing a returned edge (13) of a metal sheet (15) or of an assembly of sheets (15, 17) to penetrate a mounting groove (5) until bearing of the mounting lip (9') and of the auxiliary lip (25) on a surface of the said returned edge (13) is achieved.

10. A method according to claim 9, characterised in that the said method is a method of fitting a sealing-tight gasket for the automobile industry.

## Patentansprüche

1. Profil mit einer Befestigungslippe, die imstande ist, sich gegen eine Montagefläche anzulegen, dadurch **gekennzeichnet,** daß die Befestigungslippe (9') mindestens eine Hilfslippe (25, 25.1, 25.2) aufweist, die sich gegen die Montagefläche anlegt und die Befestigungslippe (9') auf die Montagefläche aufdrückt, wenn man auf das Profil eine Demontagekraft aufbringt, um derart die Intensität der Kräfte zu erhöhen, die zur Demontage des Profils von der Montagefläche erforderlich sind.

2. Profil nach Anspruch 1, dadurch **gekennzeichnet,** daß die Hilfslippe (25, 25.1, 25.2) an der Wurzel der Befestigungslippe (9') eingebracht ist.

3. Profil nach Anspruch 1 oder 2, dadurch **gekennzeichnet,** daß die Befestigungslippe (9') auf einer ersten Wand einer Montageaussparung (5) angeordnet ist.

4. Profil nach Anspruch 3, dadurch **gekennzeichnet,** daß eine zweite Wand der Montageaussparung (5) mit einem Andruckelement (11) versehen ist, das im wesentlichen der Montagelippe (9') gegenüberliegend angeordnet ist.

5. Profil nach Anspruch 3 oder 4, dadurch **gekennzeichnet,** daß die Befestigungslippe (9') mit einer Anzahl von Hilfslippen (25.1, 25.2) versehen ist, wobei jede Hilfslippe imstande ist, sich auf eine Oberfläche eines Montageprofils anzulegen, insbesondere einen Rand eines Blechs oder einer Anordnung von Blechen (13) mit unterschiedlichen Dicken, der in die Montageaussparung (5) eindringt.

6. Profil nach irgendeinem der vorangehenden Ansprüche, dadurch **gekennzeichnet,** daß das genannte Profil ein Dichtungsprofil insbesondere für die Kraftfahrzeugindustrie ist, insbesondere ein Abstreifprofil, ein Türdichtungsprofil, ein Kofferraum-Dichtungsprofil oder ein Gleitprofil.

7. Profil nach irgendeinem der vorangehenden Ansprüche, dadurch **gekennzeichnet,** daß es aus Elastomer ausgebildete Elemente aufweist.

8. Profil nach irgendeinem der vorangehenden Ansprüche, dadurch **gekennzeichnet,** daß es aus Plastomer ausgebildete Elemente aufweist.

9. Verfahren zum Aufklemmen eines Profils nach irgendeinem der Ansprüche 3 bis 8, dadurch **gekennzeichnet,** daß es einen Schritt aufweist, der daraus besteht, einen Rand (13) eines Blechs (15) oder einer Anordnung von Blechen (15, 17) in eine Montageaussparung (5) eindringen zu lassen, bis man die Anlage der Montagelippe (9') und der Hilfslippe (25) auf der einen Oberfläche des genannten Randes (13) erreicht.

10. Verfahren nach Anspruch 9, dadurch **gekennzeichnet,** daß das genannte Verfahren ein Montageverfahren für eine Dichtung für die Kraftfahrzeugindustrie ist.
